# EUROPEAN PATENT APPLICATION

(11) **EP 4 646 985 A1**
(43) Date of publication of application: **12.11.2025**
(21) Application number: 24849678.8
(22) Date of filing: 17.05.2024
(51) Int. Cl.: A47L 9/28, A47L 9/30, G06T 7/60

(54) **ROBOT CLEANER COMPRISING LIGHT-EMITTING UNIT AND CONTROL METHOD THEREOF**

(30) Priority: 01.08.2023 KR 20230100587
(71) Applicant: Samsung Electronics Co., Ltd., Suwon-si, Gyeonggi-do 16677 (KR)
(72) Inventor: HONG, Hyunseok, Suwon-si Gyeonggi-do 16677 (KR)
(74) Representative: Gulde & Partner
(86) International application number: PCT/KR2024/095816
(87) International publication number: WO 2025/029111

(57) **Abstract**

A robot cleaner and a control method thereof are provided. The robot cleaner includes a camera, a vacuum, a driver, and at least one processor configured to acquire at least one image through the camera while the robot cleaner is driving along a first driving route, identify an amount of dust in areas within a view angle of the camera based on the acquired image, control the suction part to perform a cleaning operation for an area to be cleaned identified based on the identified amount of dust, and acquire first map data indicating an amount of dust of an area wherein the robot cleaner drove among the areas within the view angle of the camera and second map data indicating an amount of dust of an area wherein the robot cleaner is going to drive among the areas within the view angle of the camera based on the identified amount of dust.

## Description

### [Technical Field]

The disclosure relates to a robot cleaner including a light emitter and a control method thereof, and more particularly, to a robot cleaner that outputs a light toward a bottom surface located in front of the robot cleaner through a light emitter and identifies an amount of dust existing on the bottom surface, and a control method thereof.

### [Description of the Related Art]

Recently, as electronic technologies have developed, robots are being used in various industrial fields. As object recognition technologies have developed, a robot can correctly distinguish various objects, and as autonomous driving technologies have developed, a robot can perform stable driving without interfering with people's passing in a driving space.

In particular, robots that were used only in industrial fields are now being used in many homes for domestic chores. Among such domestic robots, cleaning robots are a large proportion, and a robot cleaner performs a cleaning function while driving in a home automatically. However, in the case of such a robot cleaner, its ability to drive is often dependent on a predetermined driving route, and thus it performs a cleaning operation for all areas on a drive route. Accordingly, the robot cannot help performing a cleaning operation while driving in an area wherein cleaning is not necessary (i.e., an area wherein dust does not exist or which is clean), and due to this, a problem arises wherein a long time is spent and unnecessary power is consumed before a cleaning operation is completed.

### [Detailed Description of the Invention]

### [Technical Solution]

According to an aspect of the disclosure, a robot cleaner includes: a camera; a vacuum configured suction dust from a surface on which the robot cleaner is disposed; a driver configured to move the robot cleaner; at least one memory storing one or more instructions; and at least one processor configured to execute the one or more instructions, wherein the one or more instructions, when executed by the at least one processor, cause the robot cleaner to: acquire at least one image through the camera while the robot cleaner moves along a first driving route, identify an amount of dust in one or more areas within a view angle of the camera based on the at least one image, control the vacuum to perform a cleaning operation for an area to be cleaned from among the one or more areas based on the amount of dust that is identified, acquire first map data indicating an amount of dust in a first area among the one or more areas, wherein the first area corresponds to a portion of the first driving route that the robot cleaner has previously driven, acquire second map data indicating an amount of dust of a second area among the one or more areas, wherein the second area corresponds to a portion of the first driving route that the robot cleaner has yet to drive, and based on the area to be cleaned not being located on the first driving route, set a second driving route that may include the area to be cleaned, and control the driver to move the robot cleaner along the second driving route.

The one or more instructions, when executed by the at least one processor, may further cause the robot cleaner to: identify an area in which the amount of dust is greater than or equal to a predetermined value, among the one or more areas, as the area to be cleaned.

The one or more instructions, when executed by the at least one processor, may further cause the robot cleaner to: acquire the second map data before performing the cleaning operation, based on the robot cleaner completing the cleaning operation along the second driving route, control the driver to return the robot cleaner to the first driving route, and the first map data may include information re-identifying the amount of dust in an area among the one or more areas that was previously cleaned by the robot cleaner.

The robot cleaner may further include a communication interface, and the one or more instructions, when executed by the at least one processor, may further cause the robot cleaner to: identify a reduction rate of dust for the area to be cleaned based on the first map data and the second map data, and transmit the first map data and the identified reduction rate of dust for the area to be cleaned to a user terminal device through the communication interface.

The one or more instructions, when executed by the at least one processor, may further cause the robot cleaner to: based on the driving of the robot cleaner along the first driving route being completed: identify at least one area to be re-cleaned among the one or more areas based on the first map data, wherein the at least one area to be re-cleaned was previously cleaned by the robot cleaner, set a third driving route including the at least one area to be re-cleaned, and control the driver to move the robot cleaner along the third driving route.

The one or more instructions, when executed by the at least one processor, may further cause the robot cleaner to control the vacuum to suction dust in the area to be cleaned with a suction strength corresponding to the amount of dust identified in the area to be cleaned.

The one or more instructions, when executed by the at least one processor, may further cause the robot cleaner to: based on the robot cleaner being located in the area to be cleaned, activate the vacuum, and based on the robot cleaner being located in an area among the one or more areas other than the area to be cleaned, control the vacuum to be in a deactivated state.

The robot cleaner may further include a light emitter configured to emit light, the one or more instructions, when executed by the at least one processor, may further cause the robot cleaner to: based on the robot cleaner driving along the first driving route, emit a light toward a bottom surface located in front of the robot cleaner through the light emitter, and the at least one image may include at least one image of the bottom surface that was irradiated with the light.

The one or more instructions, when executed by the at least one processor, may further cause the robot cleaner to, based on identifying that an area among the one or more areas included within the view angle of the camera is an area that was previously cleaned by the robot cleaner, increase a strength of the light emitted by the light emitter from a first strength to a second strength.

According to an aspect of the disclosure, a method of controlling a robot cleaner, includes: acquiring at least one image through a camera of the robot cleaner while the robot cleaner drives along a first driving route; identifying an amount of dust in one or more areas within a view angle of the camera based on the at least one image; controlling a vacuum of the robot cleaner to perform a cleaning operation for an area to be cleaned from among the one or more areas based on the amount of dust that is identified; acquiring first map data indicating an amount of dust of a first area among the one or more areas, wherein the first area corresponds to a portion of the first driving route that the robot cleaner has previously driven; and acquiring second map data indicating an amount of dust of a second area among the one or more areas, wherein the second area correspond to a portion of the first driving route that the robot cleaner has yet to drive, wherein the controlling the vacuum includes: identifying the area to be cleaned based on the amount of dust in the area to be cleaned; based on the area to be cleaned not being located on the first driving route, setting a second driving route that may include the area to be cleaned; and controlling a driver of the robot cleaner to move the robot cleaner along the second driving route.

The controlling the vacuum may further include identifying an area in which the amount of dust is greater than or equal to a predetermined value, among the one or more areas, as the area to be cleaned.

The method may further include: based on the robot cleaner completing the cleaning operation along the second driving route, controlling the driver to return the robot cleaner to the first driving route, the acquiring the second map data may include acquiring the second map data before performing the cleaning operation, and the acquiring the first map data may include re-identifying the amount of dust in an area among the one or more areas that was previously cleaned by the robot cleaner.

The method may further include: identifying a reduction rate of dust for the area to be cleaned based on the first map data and the second map data; and transmitting the first map data and the identified reduction rate of dust for the area to be cleaned to a user terminal device through a communication interface.

The method may further include: based on the driving of the robot cleaner along the first driving route being completed: identifying at least one area to be re-cleaned among the one or more areas based on the first map data, wherein the at least one area to be re-cleaned was previously cleaned by the robot cleaner; setting a third driving route including the at least one area to be re-cleaned; and controlling the driver to move the robot cleaner along the third driving route.

According to an aspect of the disclosure, a non-transitory computer readable storage medium has instructions stored therein, which when executed by at least one processor cause the at least one processor to execute a method of controlling a robot cleaner, the method including: acquiring at least one image through a camera of the robot cleaner while the robot cleaner drives along a first driving route; identifying an amount of dust in one or more areas within a view angle of the camera based on the at least one image; controlling a vacuum of the robot cleaner to perform a cleaning operation for an area to be cleaned from among the one or more areas based on the amount of dust that is identified; acquiring first map data indicating an amount of dust of a first area among the one or more areas, wherein the first area corresponds to a portion of the first driving route that the robot cleaner has already driven; and acquiring second map data indicating an amount of dust of a second area among the one or more areas, wherein the second area correspond to a portion of the first driving route that the robot cleaner has yet to drive, wherein the controlling the vacuum includes: identifying the area to be cleaned based on the amount of dust in the area to be cleaned; based on the area to be cleaned not being located on the first driving route, setting a second driving route that may include the area to be cleaned; and controlling a driver of the robot cleaner to move the robot cleaner along the second driving route.

### [BRIEF DESCRIPTION OF THE DRAWINGS]

The above and other aspects, features, and advantages of certain embodiments of the present disclosure will be more apparent from the following description taken in conjunction with the accompanying drawings, in which:
FIG. 1 is an example diagram of a robot cleaner according to an embodiment of the disclosure;
FIG. 2 is a block diagram illustrating a configuration of a robot cleaner according to an embodiment of the disclosure;
FIG. 3 is a sequence diagram schematically illustrating a control method of a robot cleaner according to an embodiment of the disclosure;
FIG. 4 is an example diagram illustrating a driving route that is set according to a mode of a robot cleaner according to an embodiment of the disclosure;
FIG. 5A and FIG. 5B are example diagrams illustrating a method of generating first map data and second map data acquired by a robot cleaner according to an embodiment of the disclosure;
FIG. 6 is a sequence diagram schematically illustrating a method of controlling a robot cleaner for performing a cleaning operation for an area to be cleaned that is not located on a driving route according to an embodiment of the disclosure;
FIG. 7 is an example diagram schematically illustrating a method of controlling a robot cleaner for performing a cleaning operation for an area to be cleaned that is not located on a driving route according to an embodiment of the disclosure;
FIG. 8 is an example diagram illustrating setting of a third driving route for an area to be re-cleaned identified based on first map data according to an embodiment of the disclosure;
FIG. 9 is an example diagram illustrating first map data and second map data including dust information of an area to be cleaned acquired by a robot cleaner displayed on a user terminal according to an embodiment of the disclosure; and
FIG. 10 is a detailed block diagram of a robot cleaner according to an embodiment of the disclosure.

### [Mode for Invention]

Various modifications may be made to the embodiments described herein, and there may be various types of embodiments. Accordingly, specific embodiments are illustrated in the accompanying drawings, and the embodiments will be described in detail in the detailed description. However, it should be noted that the various embodiments should not be interpreted as limiting the scope of the disclosure to a specific embodiment, but they should be interpreted to include all modifications, equivalents, and/or alternatives of the embodiments of the disclosure. With respect to the detailed description of the drawings, similar components may be designated by similar reference numerals.

Also, in describing the disclosure, where it is determined that detailed explanation of related known functions or components may unnecessarily confuse the gist of the disclosure, the detailed explanation will be omitted.

In addition, the embodiments described below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, the terms used in the disclosure are used to explain specific embodiments of the disclosure, and are not intended to limit the scope of the other embodiments. In addition, singular expressions include plural expressions, unless defined obviously differently in the context.

Also, in the disclosure, expressions such as "have," "may have," "include" and "may include" should be construed as denoting that there are such characteristics (e.g., elements such as numerical values, functions, operations, and components), and the terms are not intended to exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including A, (2) including B, or (3) including A and B.

Further, the expressions "first," "second," and the like used in the disclosure may be used to describe various elements regardless of any order and/or degree of importance. Also, such expressions are used only to distinguish one element from another element, and are not intended to limit the elements.

The description in the disclosure that one element (e.g., a first element) is "(operatively or communicatively) coupled with/to" or "connected to" another element (e.g., a second element) should be interpreted to include both the case where the one element is directly coupled to the another element, and the case where the one element is coupled to the another element through still another element (e.g., a third element).

In contrast, the description that one element (e.g., a first element) is "directly coupled" or "directly connected" to another element (e.g., a second element) can be interpreted to mean that still another element (e.g., a third element) does not exist between the one element and the another element.

Also, the expression "configured to" used in the disclosure may be interchangeably used with other expressions such as "suitable for," "having the capacity to," "designed to," "adapted to," "made to" and "capable of," depending on cases. The term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g., an embedded processor) for performing the corresponding operations, or a generic-purpose processor (e.g., a CPU or an application processor) that can perform the corresponding operations by executing one or more software programs stored in a memory device.

Also, in the embodiments of the disclosure, "a module" or "a part" performs at least one function or operation, and may be implemented as hardware or software, or as a combination of hardware and software. In addition, a plurality of "modules" or "parts" may be integrated into at least one module and implemented as at least one processor, except "a module" or "a part" that needs to be implemented as specific hardware.

Various elements and areas in drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that a person having ordinary knowledge in the technical field to which the disclosure belongs can easily carry out the embodiments.

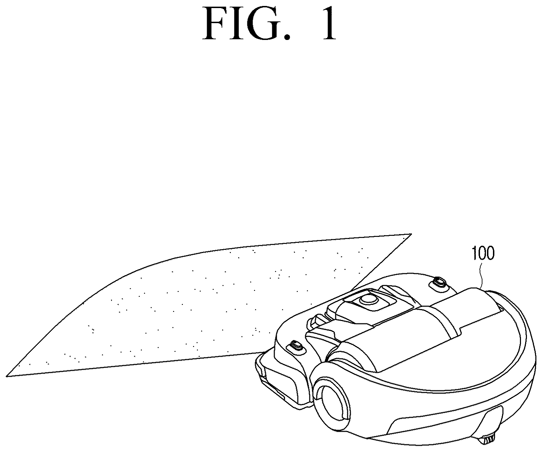

FIG. 1 is an example diagram of a robot cleaner according to an embodiment of the disclosure.

Referring to FIG. 1, the robot cleaner 100 according to an embodiment of the disclosure outputs a light toward a bottom surface (e.g., the ground) located in front of the robot cleaner 100. Then, the robot cleaner 100 acquires an image of the bottom surface that was irradiated with the light, and identifies an amount of dust existing on the bottom surface based on the acquired image. That is, unlike a conventional cleaner (or robot cleaner) that identifies an amount of dust in a process of suctioning dust, the robot cleaner 100 according to an embodiment of the disclosure may identify an amount of dust existing on a bottom surface before suctioning dust. Through this, the robot cleaner 100 according to an embodiment of the disclosure may perform a cleaning operation by selecting only a bottom surface wherein dust exists.

Specifically, in the case of a conventional robot cleaner, the robot cleaner drives only based on a driving route set for a driving space wherein the robot cleaner was located, and accordingly, the robot cleaner performs a cleaning operation for all bottom surfaces on the driving route. As a result, in the case of the conventional robot cleaner, a lot of time is spent completing the driving of the route, and as a cleaning operation was performed for an area wherein dust did not exist, power was wasted unnecessarily.

However, the robot cleaner 100 according to an embodiment of the disclosure may identify a bottom surface wherein dust exists among bottom surfaces in advance, unlike the conventional robot cleaner, and accordingly, the robot cleaner 100 may selectively perform a cleaning operation only for an area wherein it was identified that dust exists. Accordingly, a cleaning operation for a driving space can be completed swiftly, and in particular, unnecessarily power waste can be prevented.

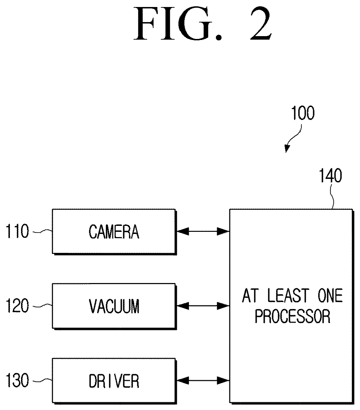

Hereinafter, an embodiment of the disclosure in this regard will be described with reference to FIG. 2 to FIG. 10.

FIG. 2 is a block diagram illustrating a configuration of a robot cleaner according to an embodiment of the disclosure.

Referring to FIG. 2, the robot cleaner 100 includes a camera 110, a vacuum 120, a driver 130, and at least one processor 140.

The camera 110 photographs an object around the robot cleaner 100, and acquires a plurality of images for the object. Specifically, the camera 110 may acquire an image for an object that exists around the robot cleaner 100 (e.g., a person, an animal, and other objects, etc.).

In particular, according to an embodiment of the disclosure, the camera 110 may photograph a bottom surface in front of the robot cleaner 100, and acquire a plurality of images for the bottom surface. For this, the camera 110 may be arranged on the front surface of the robot cleaner 100 to photograph the bottom surface in front of the robot.

The camera 110 may be implemented as an imaging device such as an imaging device having a CMOS structure (a CMOS image sensor (CIS)), an imaging device having a CCD structure (a charge coupled device), etc. However, the disclosure is not limited thereto, and the camera 110 may be implemented as camera (110) modules of various resolutions that can photograph a subject. Also, the camera 110 may be implemented as a depth camera, a stereo camera, or an RGB camera, etc. Through this, the camera 110 may acquire depth information of an image together with an image for the object.

The vacuum 120 is a component that suctions dust and other particles or matter from a surface on which the robot cleaner is disposed, and may include a brush, a motor, a fan (or a drum), etc. Here, the brush of the vacuum 120 may be implemented as a material that has a small friction coefficient and has good wear resistance such as natural hair or polyamide (PA: nylon), etc.

Also, the vacuum 120 may drive the motor and rotate the fan (or the drum) connected to the motor, and as the fan rotates, dust on a surface to be cleaned (e.g., a bottom surface) swept by the brush may be suctioned into the inside of the cleaner 100 (e.g., the inside of the main body).

The driver 130 is a component for moving the robot cleaner 100. The driver 130 may be implemented as a wheel, etc. For this, the driver 130 may include a motor. The processor 140 may control the driver 130 and thereby control various driving operations such as moving, pause, speed control, and direction switching, etc. of the robot cleaner 100.

Here, the driver 130 may adjust a driving direction and a driving speed according to control by the processor 140. For this, the driver 130 may include a power generation device (e.g., a gasoline engine, a diesel engine, a liquefied petroleum gas (LPG) engine, an electric motor, etc. according to the used fuel (or the energy source)) that generates power for the robot cleaner 100 to drive, a steering device (e.g., manual steering, hydraulics steering, electronic control power steering (EPS), etc.) for adjusting a driving direction, etc.

The at least one processor 140 is electrically connected with the camera 110, the vacuum 120, and the driver 130, and controls overall operations and functions of the robot cleaner 100.

The at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or a random combination of the other components of the robot cleaner 100, and perform an operation related to communication or data processing. Also, the at least one processor 140 may execute one or more programs or instructions stored in the memory. For example, the at least one processor 140 may perform the method according to an embodiment of the disclosure by executing at least one instruction stored in the memory.

In a case where the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 140 may be implemented as a single core processor including one core, or it may be implemented as one or more multicore processors including a plurality of cores (e.g., multicores of the same kind or multicores of different kinds). In case the at least one processor 140 is implemented as multicore processors, each of the plurality of cores included in the multicore processors may include an internal memory of the processor 140 such as a cache memory, an on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the disclosure and perform the instruction, or the plurality of entire cores (or some of the cores) may be linked with one another, and read a program instruction for implementing the method according to an embodiment of the disclosure and perform the instruction.

In case the method according to an embodiment of the disclosure includes a plurality of operations, the plurality of operations may be performed by one core among the plurality of cores included in the multicore processors, or they may be implemented by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor 140 may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

Hereinafter, the at least one processor 140 will be referred to as the processor 140, for the convenience of explanation.

According to an embodiment of the disclosure, the robot cleaner 100 may further include a light emitter. Here, the light emitter may be a component that outputs a light toward a bottom surface located in front of the robot cleaner 100. For this, the light emitter may include at least one light emitting element. For example, the light emitting element may be a light emitting diode (LED), a micro LED, etc. In particular, the light emitting element may be included in an LED array including a plurality of LEDs.

The light emitter may be arranged in a location lower than the camera 110 arranged on the front surface of the robot cleaner 100. Accordingly, the camera 110 may acquire an image for a bottom surface that is irradiated with an output light emitted by the light emitter. As an example, the light emitter may be arranged on the robot cleaner 100 at a height of 0.5cm to 1cm from the bottom surface.

Also, the light emitter may further include a lens, a mirror, etc. that diffuse a light such that a light output from the light emitter is scattered. Through this, the light emitter may radiate a light for a wider area of the bottom surface located in front of the robot cleaner 100. For example, the light emitter may emit a light in a range of 60° or bigger in left and right directions within a range of 20° in upper and lower directions.

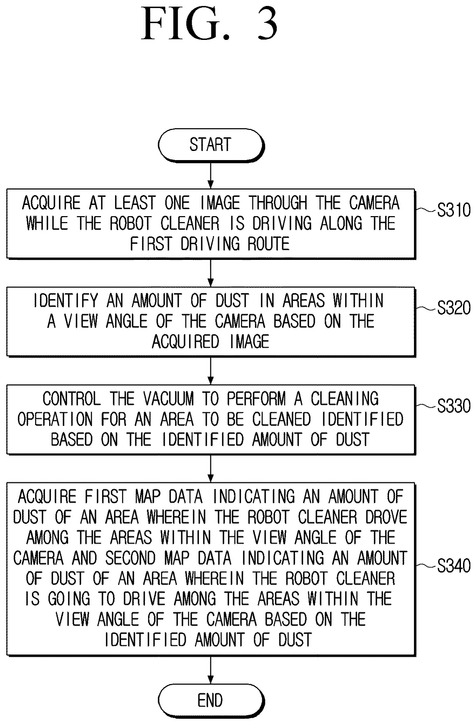

FIG. 3 is a sequence diagram schematically illustrating a control method of a robot cleaner according to an embodiment of the disclosure.

Referring to FIG. 3, the processor 140 may acquire at least one image through the camera 110 while the robot cleaner 100 is driving along a first driving route in operation S310. Here, the first driving route may be a driving route that was set for a driving space wherein the robot cleaner 100 is located.

Specifically, in the memory of the robot cleaner 100, predetermined driving route information may be stored. Here, the predetermined driving route may be set based on the size of the driving space wherein the robot cleaner 100 is located, the location of the station of the robot cleaner 100, etc. Also, the driving space may be an indoor space wherein the robot cleaner 100 is located.

For setting the driving route, in the memory of the robot cleaner 100, map data 10 regarding the driving space wherein the robot cleaner 100 is located may be stored. The processor 140 may acquire environment information of the driving space (e.g., information on objects (the wall, the furniture, etc.) and the like inside the driving space) identified based on an image acquired through the camera 110 of the robot cleaner 100, and generate map data 10 based on the acquired environment information. Not only that, the robot cleaner 100 may identify objects (the wall, the furniture, etc.) inside the driving space based on sensing information regarding the environment of the driving space (e.g., distance information of objects, point cloud information regarding objects, etc.) through a sensor, and generate the map data 10 based on information on the identified objects. The processor 140 may generate the map data 10 regarding the driving space by using a simultaneous localization and mapping (SLAM) algorithm.

The processor 140 may set a driving route for the driving space of the robot cleaner 100 based on the generated map data 10. Here, the processor 140 may set the starting location of driving and the ending location of driving on the map data 10, and then set an optimal driving route wherein the robot cleaner 100 can drive from the starting location of driving to the ending location of driving. For example, the processor 140 may set a driving route for the driving space while generating the map data 10 based on the simultaneous localization and mapping (SLAM) algorithm. Alternatively, the processor 140 may set a driving route inside the driving space by using a local path planning algorithm.

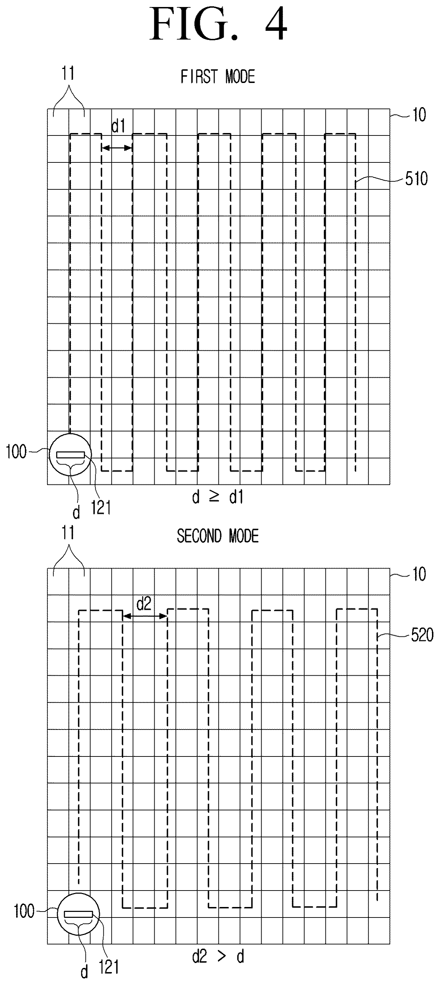

FIG. 4 is an example diagram illustrating a driving route that is set according to a mode of a robot cleaner according to an embodiment of the disclosure.

The processor 140 may set a plurality of driving routes according to the mode of the robot cleaner 100. As an example, the modes of the robot cleaner 100 may include a mode wherein the robot cleaner 100 performs cleaning at the same time as performing driving (referred to as a first mode hereinafter), and a mode wherein the robot cleaner 100 performs only driving and detects an area to be cleaned and then selectively cleans only the area to be cleaned (referred to as a second mode hereinafter).

Here, the driving routes of each of the first mode and the second mode may be set in consideration of the size of the vacuum 120 of the robot cleaner 100, etc. For example, referring to FIG. 4, the interval d1 of the driving route 510 of the first mode may be set to have a width that is smaller than or is the same as the width d of the brush 121 of the vacuum 120. In contrast, the interval d2 of the driving route 520 of the second mode may be set to have a width that is bigger than the width d of the brush 121 of the vacuum 120.

That is, the interval d1 of the driving route of the first mode may be set to be smaller than the interval d2 of the driving route of the second mode. In the case of the first mode, the robot cleaner 100 performs a cleaning operation at the same time as performing driving, and thus a more detailed driving route 510 may be set for the driving space. In contrast, in the case of the second mode, the robot cleaner 100 detects an area to be cleaned swiftly but does not drive while performing cleaning, and thus the driving route 520 may be set to be less detailed than the driving route 510 of the first mode. Accordingly, in the case of the second mode, the robot cleaner 100 may perform a cleaning operation for the driving space more swiftly than in the first mode.

From below, explanation will be described by assuming that the robot cleaner 100 drives in a driving space based on the driving route 520 of the second mode. Accordingly, the driving route 520 of the second mode will be referred to as the first driving route.

Referring to FIG. 4, the map data 10 may include a plurality of cells (or areas) 11. Here, the cells 11 mean basic units of the map data 10 indicating specific locations (or areas) in an actual driving space. For example, the cells 11 may have the same sizes and forms (e.g., a quadrangle, a triangle, a hexagon, a polygon, a circle, an oval, etc.) with one another, and may be arranged in a grid form on the map data 10.

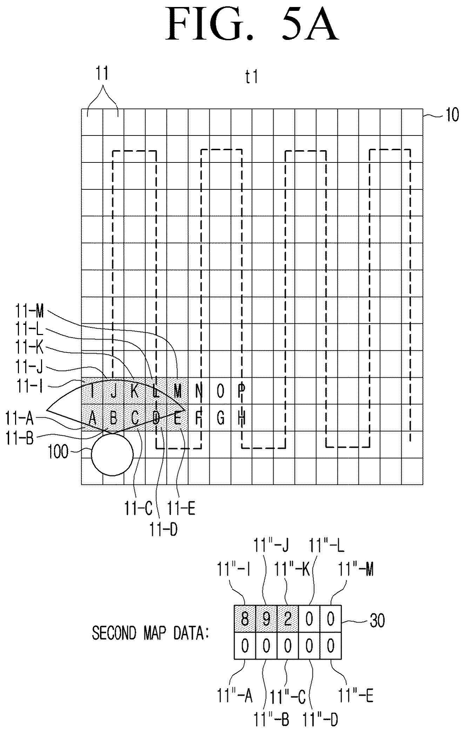

That is, each cell 11 on the map data 10 may correspond to each location (or area) in an actual space. In each cell 11, information on a probability that an object may exist may be included. Accordingly, the processor 140 may identify a location or an area wherein the robot cleaner 100 may drive based on the probability information included in each cell 11, and set driving routes (i.e., the first and second driving routes 510 and 520). In the disclosure, probability information (i.e., information on a probability that an object may exist) was not illustrated in each cell of the map data in FIG. 5A, FIG. 5B, FIG. 7, and FIG. 8 as well as FIG. 4, for the convenience of explanation.

The processor 140 may control the driver 130 such that the robot cleaner 100 drives along the first driving route 520 stored in the memory. Specifically, the processor 140 may rotate the wheel of the driver 130, and may thereby perform control such that the robot cleaner 100 drives in the driving space along the first driving route. Then, the processor 140 may acquire a plurality of images for a bottom surface located in front of the robot cleaner 100 through the camera 110 while the robot cleaner 100 is driving.

The processor 140 acquires an amount of dust of an area within a view angle of the camera 110 based on the acquired image in operation S320.

Specifically, the processor 140 may identify at least one object in the acquired image. Then, the processor 140 may identify at least one object corresponding to dust among the identified at least one object.

Here, the processor 140 may identify an object smaller than a predetermined size in the acquired image as dust. For example, the processor 140 may identify a point smaller than the predetermined size that is identified in the acquired image, and identify the identified point as dust on the bottom surface in front of the robot cleaner 100.

Also, the processor 140 may identify an object that has a size smaller than the predetermined size, and has brightness greater than or equal to predetermined brightness in the acquired image as dust. For example, the processor 140 may identify each of pixel values of a plurality of pixels in the acquired image. Here, the processor 140 may identify that a pixel of which pixel value is greater than or equal to a predetermined value is dust. In particular, the processor 140 may group a plurality of adjacent pixels having a pixel value greater than or equal to the predetermined value, and identify the size of an object corresponding to the plurality of pixels based on the number of the plurality of pixels belonging to the group (or the size of the group including the plurality of pixels). Then, if it is identified that the size of the object is smaller than the predetermined size, the processor 140 may identify that the object is dust.

Here, the processor 140 may identify dust based on a difference between pixel values of a pixel having a pixel value greater than or equal to the predetermined value and another pixel around the pixel. In particular, the processor 140 may identify a difference of a pixel value of another pixel around a pixel having a pixel value greater than or equal to the predetermined value, and if it is identified that the difference of the pixel value is greater than or equal to the predetermined value, the processor 140 may identify the pixel having a pixel value greater than or equal to the predetermined value as dust.

Also, the processor 140 may identify dust in an image by inputting the acquired image into a neural network model trained to identify dust in an image which is stored in the memory. As an output value of the neural network model, the processor 140 may acquire the location of dust and the amount of dust in the image.

For this, the processor 140 may train the neural network model based on learning data including a plurality of images stored in the memory. In particular, in the plurality of images included in the learning data, at least one dust may be included. Also, each image may be preprocessed such that at least one dust included in each image is bounded. The processor 140 may train the neural network model to identify dust in an image based on the plurality of images.

For the neural network model, various networks such as a deep neural network (DNN), a convolutional neural network (CNN), a recurrent neural network (RNN), a restricted Boltzmann machine (RBM), a deep belief network (DBN), deep Q-networks, etc. may be used.

The processor 140 may identify a plurality of dust particles in the image, and then identify an amount of dust existing on the bottom surface located within the view angle of the camera 110 based on the number of the plurality of identified dust particles. For example, the processor 140 may sum up the number of the plurality of dust particles, and thereby calculate the amount of dust (or the dust concentration) of the area of the bottom surface located within the view angle of the camera 110.

In particular, the processor 140 may identify the plurality of cells 11 corresponding to the bottom surface located within the view angle of the camera 110 on the map data 10, and identify the amount of dust existing in each cell. Then, the processor 140 may identify the amount of dust compared to the area of each cell, and identify the dust concentration of each cell.

According to an embodiment of the disclosure, the processor 140 may cause a light to be radiated toward a bottom surface in front of the robot cleaner 100 by using the light emitter of the robot cleaner 100, and acquire an image for the area which was irradiated with the light through the camera 110, and then identify the amount of dust of the area within the view angle of the camera 110 based on the acquired image.

Specifically, while the robot cleaner 100 is driving, the processor 140 may output a light toward the front side of the robot cleaner 100 through the light emitter. Then, the processor 140 may acquire an image for the bottom surface which was irradiated with the output light through the camera 110.

In particular, as the light output through the light emitter is radiated on the bottom surface, the processor 140 may identify dust existing on the bottom surface more accurately in the image acquired through the camera 110. Here, the processor 140 may identify pixel values of each pixel in the image, and identify dust in the image based on the identified pixel values. In particular, as the light is radiated, the pixel values of the pixels in the image for the dust existing on the bottom surface may have relatively higher values. Accordingly, the processor 140 may identify pixels of which pixel values are greater than or equal to the predetermined value as dust. In this regard, the aforementioned embodiment of identifying dust can be applied identically, and thus detailed explanation will be omitted.

Then, the processor 140 may identify the amount of dust and control the vacuum 120 to perform a cleaning operation for an area to be cleaned, where the area to be cleaned is identified based on the identified amount of dust in operation S330.

Specifically, the processor 140 may identify an area to be cleaned based on the identified amount of dust. In particular, the processor 140 may identify an area wherein the identified amount of dust is greater than or equal to a predetermined amount as an area to be cleaned. Here, the area to be cleaned may be identified in the bottom surface located within the view angle of the camera 110 that is identified in the image.

For identifying an area to be cleaned, the processor 140 may group a plurality of dust particles in the image, and identify an area including the plurality of grouped dust particles as an area to be cleaned. In particular, the processor 140 may group dust particles of which distances among adjacent dust particles are within a predetermined distance, and identify the number of dust particles included in the group. Then, if the number of the dust particles included in the group is greater than or equal to a predetermined number, the processor 140 may identify that the amount of dust is greater than or equal to the predetermined amount. Then, the processor 140 may identify an area to be cleaned on the bottom surface in front of the robot cleaner 100 based on the location of the group including the dust particles greater than or equal to the predetermined number in the image.

As an example, the processor 140 may identify a group including dust particles in the predetermined number in the image as an area to be cleaned. Then, the processor 140 may identify the location of the area to be cleaned on the bottom surface in front of the robot cleaner 100 based on the location of the identified area to be cleaned in the image. For example, the processor 140 may acquire coordinate information of a pixel corresponding to the area to be cleaned in the image, and convert the acquired coordinate information into coordinate information on the bottom surface in front of the robot cleaner 100. Then, the processor 140 may identify the location of the area to be cleaned on the bottom surface in front of the robot cleaner 100 based on the converted coordinate information. For this, the processor 140 may perform various image processing processes such as warping, etc. for the acquired image.

The processor 140 may identify an area to be cleaned in cell units. Specifically, the processor 140 may identify the plurality of cells 11 corresponding to the bottom surface within the view angle of the camera 110 in the map data 10 based on an image acquired through the camera 110, and identify the amount of dust or the dust concentration of each cell 11. Then, the processor 140 may identify a cell 11 of which amount of dust is greater than or equal to the predetermined value or of which dust concentration is greater than or equal to the predetermined concentration among the plurality of cells 11, and identify the identified cell 11 as an area to be cleaned.

When an area to be cleaned is identified, the processor 140 may control the vacuum 120 to perform a cleaning operation. Specifically, the processor 140 may control the driver 130 such that the robot cleaner 100 moves to the area to be cleaned, and then, when the robot cleaner 100 is located in the area to be cleaned, the processor 140 may control the vacuum 120 and suction the dust existing in the area to be cleaned.

Through this, the robot cleaner 100 of the disclosure may selectively perform a cleaning operation only for an area that needs cleaning (i.e., an area to be cleaned) in a driving space, and may thereby perform a cleaning operation for the driving space swiftly and cleanly.

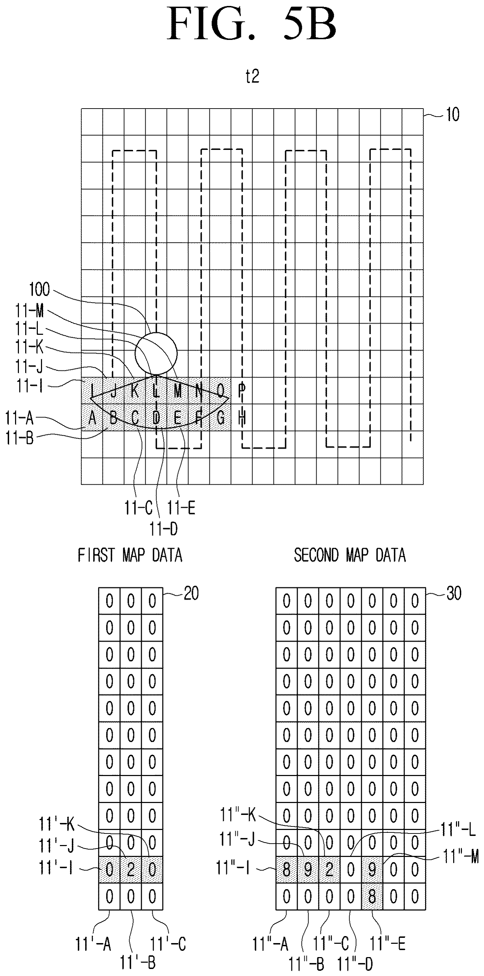

FIG. 5A and FIG. 5B are example diagrams illustrating a method of generating first map data 20 and second map data 30 acquired by the robot cleaner 100 according to an embodiment of the disclosure.

The processor 140 may acquire map data indicating an amount of dust of an area wherein the robot cleaner 100 drove among areas within the view angle of the camera 110, and map data indicating an amount of dust of an area wherein the robot cleaner 100 is going to drive among the areas within the view angle of the camera 110 based on the identified amount of dust in operation S340.

Here, the map data indicating the amount of dust may be map data including dust information in the driving space. From below, for the convenience of explanation of the disclosure, the map data indicating an amount of dust of an area wherein the robot cleaner 100 drove will be referred to as the first map data 20, and the map data indicating an amount of dust of an area wherein the robot cleaner 100 is going to drive will be referred to as the second map data 30.

The first map data 20 may be map data including information on an amount of dust of an area wherein the robot cleaner 100 already drove or performed a cleaning operation. Also, the first map data 20 may include information on an amount of dust of an area wherein the amount of dust was already identified while the robot cleaner 100 was driving. Specifically, information on an amount of dust of an area wherein the amount of dust was already identified through an image acquired by the robot cleaner 100, although the area was not located on the driving route of the robot cleaner 100, may be included in the first map data 20 again.

The second map data 30 may be map data including information on an amount of dust of an area wherein the robot cleaner 100 has not driven yet. In particular, in the second map data 30, information on an amount of dust of an area wherein the amount of dust can be identified through an image acquired by the robot cleaner 100, although the area was not located on the driving route, may be included.

According to an embodiment of the disclosure, the processor 140 may identify an amount of dust for an area in a driving space wherein the robot cleaner 100 is not located based on an acquired image. That is, as an image for a bottom surface located in front of the robot is acquired through the camera 110, and an amount of dust is identified based on the acquired image, the processor 140 may identify the amount of dust for the bottom surface on the front side wherein the robot cleaner 100 is not located.

In particular, as the robot cleaner 100 moves along a driving route, an image acquired through the camera 110 may also include an area wherein the robot cleaner 100 already drove. This is because the view angle range of the camera 110 may be wider than the interval of the driving route. Accordingly, the processor 140 may re-identify the amount of dust of the area wherein the robot cleaner 100 already drove.

The first map data 20 and the second map data 30 may be generated based on the map data 10. That is, the processor 140 may identify an amount of dust in cell units of the map data 10, and generate the first map data 20 and the second map data 30 in cell units. Specifically, the processor 140 may identify an area located in front of the robot cleaner 100 identified based on the location of the robot cleaner 100 and an acquired image on the map data 10, and identify the amount of dust for the identified area in cell units of the map data 10, and generate the first and second map data 20 and 30. Here, the processor 140 may store the first map data 20 and the second map data 30 in the memory, and update the first map data 20 and the second map data 30 whenever an amount of dust of an area within the view angle range of the camera 110 is identified. Specifically, the processor 140 may update the first map data 20 stored in the memory whenever an amount of dust of a driven area is identified, and update the second map data 30 stored in the memory whenever an amount of dust of an undriven area is identified.

Also, the processor 140 may generate the first map data 20 by updating (or overlapping) information on an amount of dust identified for a driven area in the second map data 30. In particular, information on an amount of dust of an undriven area is included in the second map data 30, and thus information on amounts of dust of more cells than in the first map data 20 may be included. Accordingly, if an amount of dust of a cell 11 which was driven or of which amount of dust was already identified is identified again, the processor 140 may update the information on the amount of dust of the cell 11 corresponding to the same location (or area) included in the second map data 30 with the information on the re-identified amount of dust, and may thereby generate the first map data 20.

From below, a method of generating the first map data 20 and the second map data 30 will be described in detail with reference to FIG. 5A and FIG. 5B. Each cell 11 included in the map data 10 (or the first and second map data 20 and 30) will be referred to as each area. An area 11' included in the first map data 20 and an area 11" included in the second map data 30 illustrated in FIG. 5A, FIG. 5B, FIG. 7, and FIG. 8 correspond to the area 11 in the same location included in the map data 10.

Referring to FIG. 5A, on a t1 time point, the processor 140 may generate the second map data 30 including information on an amount of dust of an area wherein the robot cleaner 100 is going to drive based on an image acquired through the camera 110. Specifically, the processor 140 may acquire images for areas A, B, C, D, E, I, J, K, L, and M (specifically, areas corresponding to the cells) 11-A to 11-E and 11-I to 11-M included in the view angle range of the camera 110 through the camera 110 (hereinafter, the respective areas are referred to by their cell number, for example, area A will be referred to as area 11-A, area B will be referred to as area 11-B, etc.). Then, the processor 140 may identify the amounts of dust existing in areas 11-A to 11-E and 11-I to 11-M based on the acquired images. The areas 11-A to 11-E and 11-I to 11-M are areas wherein the robot cleaner 100 has not driven yet, and the processor 140 may generate the second map data 30 including information on the amounts of dust of the areas 11-A to 11-E and 11-I to 11-M.

Then, the processor 140 may identify an area to be cleaned among the plurality of areas located in front of the robot cleaner 100 based on the generated second map data 30. Referring to FIG. 5A, the processor 140 may identify the amounts of dust for the plurality of areas (the areas 11-A to 11-E and 11-I to 11-M), and then generate the second map data 30 including the information on the amounts of dust. Here, referring to the second map data 30, the processor 140 may identify the amounts of dust existing in areas 11-I to 11-K among the plurality of areas (the areas 11-A to 11-E and 11-1 to 11-M) respectively as 8, 9, and 2. Accordingly, the processor 140 may identify the areas 11-I to 11-K among the plurality of areas (the areas 11-A to 11-E and 11-I to 11-M) as areas to be cleaned.

Then, the processor 140 may perform a cleaning operation only for the areas 11-I to 11-K among the plurality of areas (the areas 11-A to 11-E and 11-I to 11-M). Specifically, the processor 140 may control the driver 130 such that the robot cleaner 100 moves to the areas 11-I to 11-K, and when the robot cleaner 100 moves to the areas 11-I to 11-K, the processor 140 may suction the dust through the vacuum 120.

Referring to FIG. 5B, the processor 140 may acquire images including a plurality of areas (areas 11-A to 11-F and 11-I to 11-O) located in front of the robot cleaner 100 (and, included in the view angle range of the camera 110) on a t2 point through the camera 110. Then, the processor 140 may identify the amounts of dust existing in the plurality of areas (the areas 11-A to 11-F and 11-I to 11-O) based on the acquired images.

Here, the processor 140 may identify the amounts of dust for the areas wherein the robot cleaner 100 drove based on the acquired images, and generate the first map data 20 including information on the amounts of dust of the driven areas. The processor 140 may re-identify the amounts of dust for the areas wherein the robot cleaner 100 drove based on the acquired images. Specifically, referring to FIG. 5B, the areas 11-A to 11-C and 11-I to 11-K may be areas wherein the robot cleaner 100 already drove based on the driving route. Here, the driven areas may be areas overlapped by the robot cleaner 100 in case the robot cleaner 100 moves along the driving route.

In particular, in the areas driven by the robot cleaner 100 (the areas 11-A to 11-C and 11-I to 11-K), areas to be cleaned may be included. In the case of the areas 11-I to 11-K included in an image acquired on the t2 time point, they are areas to be cleaned, and are areas wherein the robot cleaner 100 performed a cleaning operation right after the t1 time point. Accordingly, the processor 140 may re-identify the amounts of dust for the areas 11-I to 11-K wherein the robot cleaner 100 performed a cleaning operation based on the image acquired on the t2 time point.

The processor 140 may identify the amounts of dust of the areas 11-A to 11-C and 11-I to 11-K wherein the robot cleaner 100 drove after the t1 time point based on the acquired image, and generate the first map data 20 including information on the amounts of dust of the areas 11-A to 11-C and 11-I to 11-K.

The processor 140 may identify an amount of dust for an area wherein the robot cleaner 100 is going to drive based on the acquired image, and generate the second map data 30 including information on the amount of dust of the area to be driven.

Specifically, referring to FIG. 5B, the areas 11-E to 11-G and 11-M to 11-O may be areas wherein the robot cleaner 100 is going to drive after the t2 time point. The processor 140 may identify the amounts of dust of the areas 11-E to 11-G and 11-M to 11-O based on the acquired image, and generate the second map data 30 including information on the identified amounts of dust. In particular, the processor 140 may update the information on the newly identified amounts of dust of the areas 11-E to 11-G and 11-M to 11-O in the previously generated second map data 30.

The processor 140 may compare the generated first and second map data 20 and 30, and identify a result of performing the cleaning operation for the areas to be cleaned (the areas 11-I to 11-K). In particular, the processor 140 may identify the reduction rates of dust, etc. of the areas to be cleaned based on the information on the amounts of dust of the areas to be cleaned included in the first and second map data 20 and 30.

Also, the processor 140 may re-identify an area that was already identified as an area to be driven previously as an area wherein the robot cleaner 100 is going to drive. That is, the processor 140 may overlappingly identify an area wherein the robot cleaner 100 is going to drive. Specifically, referring to FIG. 5A, the processor 140 may identify areas 11-D, 11-E, 11-M, 11-N included in the view angle range of the camera 110 as areas wherein the robot cleaner 100 is going to drive, based on the image acquired on the t1 time point. Accordingly, the processor 140 may include information on the amounts of dust of the areas 11-D, 11-E, 11-M, 11-N in the second map data 30 on the t1 time point. Referring to FIG. 5B, based on the image acquired on the t2 time point after the t1 time point, the processor 140 may re-identify the areas 11-D, 11-E, 11-M, 11-N as areas wherein the robot cleaner 100 will drive. Then, the processor 140 may re-identify the amounts of dust of the areas 11-D, 11-E, 11-M, 11-N based on the acquired image. Here, in case the amounts of dust of the areas to be driven are changed, the processor 140 may update the second map data 30 with the information on the amounts of dust that was acquired the most recently. This is because the amounts of dust of areas to be driven may be changed as dust is generated according to the environment inside the driving space (e.g., an operation of an air conditioner inside the driving space, etc.).

Referring to FIG. 5A, while it was identified that dust does not exist in the areas 11-D, 11-E, 11-M, 11-N that are areas to be driven on the second map data 30 generated on the t1 time point, it was identified that dust exists in the areas 11-E and 11-M among the areas 11-D, 11-E, 11-M, 11-N that are areas to be driven on the second map data 30 generated on the t2 time point. That is, the processor 140 may identify the amounts of dust of the areas 11-E and 11-M respectively as 8 and 9 based on the image acquired on the t2 time point, and update the second map data 30 based on the identified amounts of dust. Accordingly, the processor 140 may newly identify the areas 11-E and 11-M as areas to be cleaned.

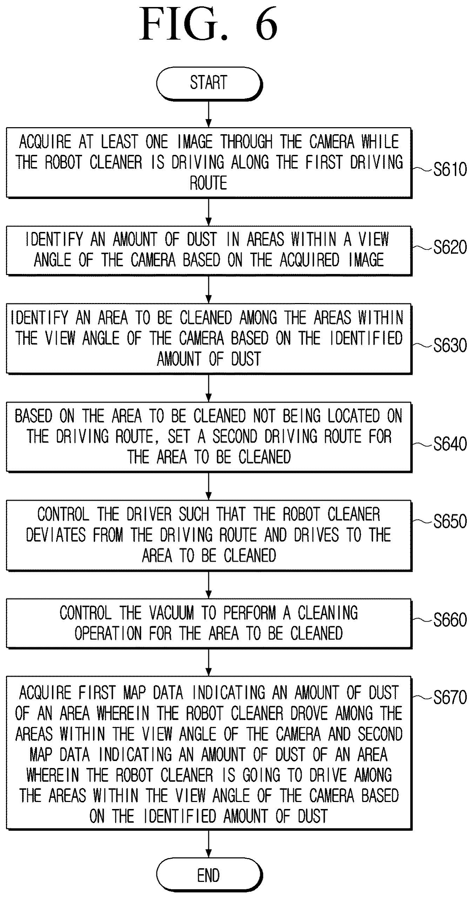

FIG. 6 is a sequence diagram schematically illustrating a method of controlling the robot cleaner 100 for performing a cleaning operation for an area to be cleaned that is not located on a driving route according to an embodiment of the disclosure. The operations S610, S620, and S670 illustrated in FIG. 6 may correspond to the operations S310, S320, and S340 illustrated in FIG. 3.

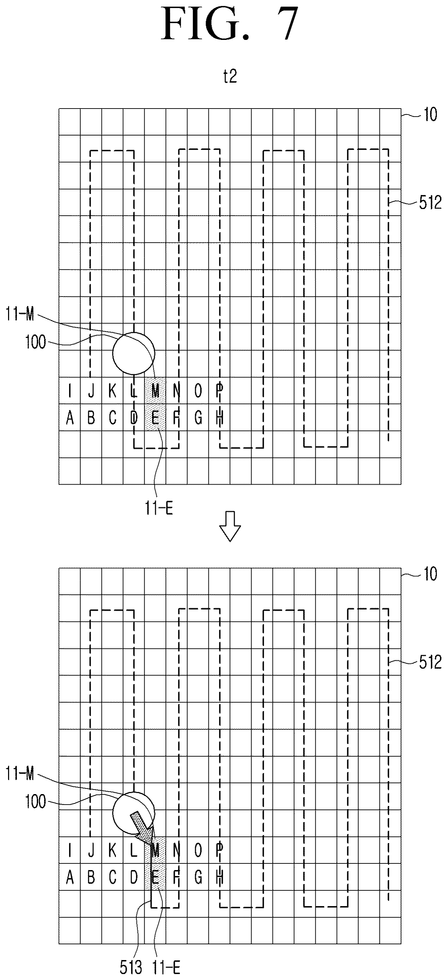

FIG. 7 is an example diagram schematically illustrating a method of controlling a robot cleaner for performing a cleaning operation for an area to be cleaned that is not located on a driving route according to an embodiment of the disclosure.

According to an embodiment of the disclosure, if an area to be cleaned is not located on the first driving route 512, the processor 140 may adjust the first driving route 512. Specifically, the processor 140 may change the first driving route 512 such that the robot cleaner 100 can move to an area to be cleaned that is not located on the first driving route 512.

In particular, the processor 140 may set a new driving route for moving to an area to be cleaned from the location of the robot cleaner 100 on the time point when the area to be cleaned was identified, and adjust the previous first driving route 512 based on the set driving route.

Referring to FIG. 6 in this regard, the processor 140 may identify an area to be cleaned among areas within the view angle of the camera based on an amount of dust acquired based on an acquired image in operation S630, and in case the area to be cleaned is not located on the driving route, the processor 140 may set a second driving route for the area to be cleaned in operation S640. The second driving route refers to a new driving route for moving to the area to be cleaned from the location of the robot cleaner 100 on the time point when the area to be cleaned was identified. The second driving route may include a driving route for the robot cleaner 100 to move to the area to be cleaned that is not located on the first driving route 512 from the location of the robot cleaner 100 on the time point when the area to be cleaned was identified, and a driving route for returning to the previous first driving route 512 from the area to be cleaned.

The processor 140 may identify whether the area to be cleaned identified based on the amount of dust is located on the driving route. In case the robot cleaner 100 moves along the driving route, the processor 140 may identify whether the area to be cleaned is located on the driving route by identifying whether the robot cleaner 100 can perform a cleaning operation for the area to be cleaned.

In particular, the processor 140 may identify whether the area to be cleaned is located on the first driving route 512 in consideration of not only the first driving route 512 set for the robot cleaner 100, but also the size, the width, etc. of the vacuum 120. For example, in case the robot cleaner 100 keeps moving along the first driving route 512, if it is identified that the vacuum 120 of the robot cleaner 100 can be located on the area to be cleaned, the processor 140 may identify that the area to be cleaned is located on the first driving route 512.

In contrast, in case the robot cleaner 100 keeps moving along the first driving route 512, if it is identified that the vacuum 120 of the robot cleaner 100 cannot be located on the area to be cleaned, the processor 140 may identify that the area to be cleaned is not located on the first driving route 512.

If it is identified that the area to be cleaned is not located on the first driving route 512, the processor 140 may set a new driving route from the location of the robot cleaner 100 on the time point when the area to be cleaned was identified (e.g., the location of the robot cleaner 100 on the first driving route 512 on the time point when the area to be cleaned was identified) to the area to be cleaned.

For example, referring to FIG. 5B and FIG. 7, the processor 140 may newly identify the areas 11-E and 11-M as areas to be cleaned based on the updated second map data 30. Here, the processor 140 may identify that the locations of the areas 11-E and 11-M that are areas to be cleaned are not located on the first driving route 512 based on the locations of the areas 11-E and 11-M that are newly identified areas to be cleaned and the predetermined first driving route 512. Accordingly, the processor 140 may set the second driving route 513 through which the robot cleaner 100 can drive to the areas 11-E and 11-M. Here, the second driving route 513 may be a driving route through which the robot cleaner 100 can drive to the areas 11-E and 11-M from the previous first driving route 512. Then, the processor 140 may adjust the first driving route 512 based on the set second driving route 513. In particular, the processor 140 may adjust the previous first driving route 512 to include the set second driving route 513.

Then, the processor 140 may control the driver 130 such that the robot cleaner 100 deviates from the first driving route 512 and drives to the area to be cleaned along the set second driving route 513 in operation S650.

The processor 140 may control the driver 130 such that the robot cleaner 100 drives to the area to be cleaned along the set second driving route 513. Then, when a cleaning operation for the area to be cleaned is completed, the processor 140 may control the driver 130 such that the robot cleaner 100 returns to the previous first driving route 512.

Here, before performing a cleaning operation for the area to be cleaned that is not located on the first driving route 512, the processor 140 may acquire the second map data 30 based on the amount of dust of the area to be cleaned on the basis of the acquired image. Then, when the cleaning operation for the area to be cleaned is completed along the second driving route 513, the processor 140 may control the driver 130 such that the robot cleaner 100 returns to the first driving route 512 and then drives along the first driving route 512. Then, while the robot cleaner 100 is driving along the first driving route 512, if the amount of dust of the area to be cleaned is re-identified based on at least one image acquired through the camera 110, the processor 140 may acquire the first map data 20 based on the re-identified amount of dust. In this regard, the aforementioned explanation of the disclosure regarding FIG. 5A and FIG. 5B is applied identically, and thus detailed explanation will be omitted.

According to an embodiment of the disclosure, when driving of the robot along the first driving route 512 is completed, the processor 140 may identify at least one area to be re-cleaned among the plurality of areas to be cleaned based on an identified amount of dust. Then, the processor 140 may set a third driving route 514 for the identified at least one area to be re-cleaned, and control the driver 130 such that the robot cleaner 100 drives to the at least one area to be re-cleaned according to the set third driving route 514.

Specifically, when the driving of the robot cleaner 100 is completed based on the first driving route 512 (or the adjusted first driving route), the processor 140 may identify re-identified amounts of dust for the plurality of areas to be cleaned based on the first map data 20. Then, the processor 140 may identify an area to be re-cleaned wherein the robot cleaner 100 will perform a cleaning operation again among the plurality of areas to be cleaned based on the re-identified amounts of dust. In particular, the processor 140 may identify an area to be cleaned of which re-identified amount of dust is greater than or equal to a predetermined value or of which reduction rate of dust is smaller than a predetermined value based on the first and second map data 20 and 30 as an area to be re-cleaned.

Then, the processor 140 may set the third driving route 514 for the area to be re-cleaned such that the robot cleaner 100 can perform a cleaning operation only for the identified area to be re-cleaned. In particular, as the third driving route 514 is set only for the selected area to be re-cleaned among the plurality of areas to be cleaned, the shape and the length thereof may be simplified or shorter than the first driving route 512.

Then, the processor 140 may perform a re-cleaning operation for the area to be re-cleaned based on the set third driving route 514. Specifically, the processor 140 may control the driver 130 such that the robot cleaner 100 drives to the at least one area to be re-cleaned along the third driving route 514, and when the robot cleaner 100 moves to the area to be re-cleaned, the processor 140 may suction dust through the vacuum 120.

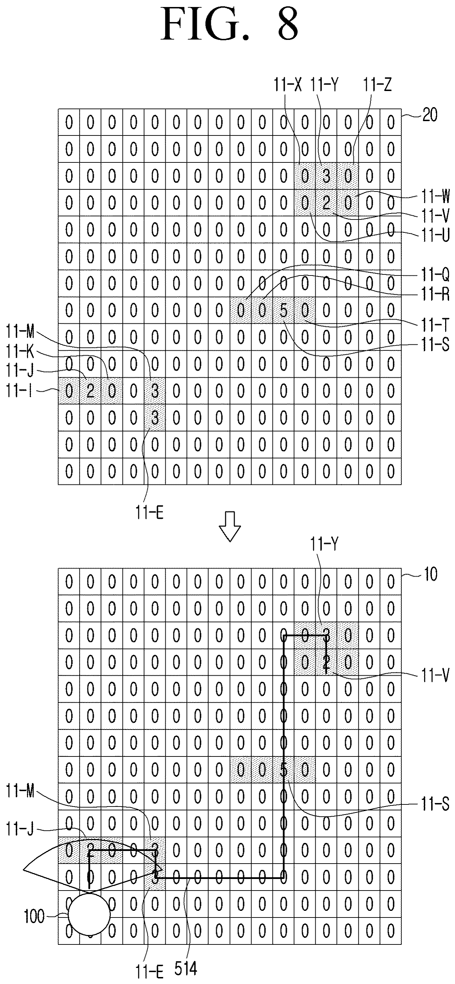

FIG. 8 is an example diagram illustrating setting of the third driving route 314 for an area to be re-cleaned identified based on the first map data 20 according to an embodiment of the disclosure.

Referring to FIG. 8, the processor 140 may identify six areas to be cleaned (areas 11-J, 11-M, 11-E, 11-S, 11-U, and 11-Y) wherein it was identified that dust still exists among the fifteen areas to be cleaned, areas 11-I, 11-J, 11-K, 11-M, 11-E, 11-Q, 11-R, 11-S, 11-T, 11-U, 11-V, 11-W, 11-X, 11-Y, and 11-Z, as areas to be re-cleaned. Then, the processor 140 may set the third driving route 514 for the six areas to be re-cleaned, areas 11-J, 11-M, 11-E, 11-S, 11-U, and 11-Y, and perform a cleaning operation for the areas to be re-cleaned, areas 11-J, 11-M, 11-E, 11-S, 11-U, and 11-Y, based on the set third driving route 514.

In particular, in the areas to be re-cleaned of the robot cleaner 100, not only an area to be cleaned that was identified based on the second map data 30, but also a new area that was not identified as an area to be cleaned may be included. In particular, according to the environment inside the driving space wherein the robot cleaner 10 is located, dust may newly exist in an area that was not identified as an area to be cleaned by the root cleaner 100. Accordingly, the processor 140 may re-identify the amount of dust of an area wherein the robot cleaner 100 already drove by using the first map data 20 including the information on the amounts of dust for the areas wherein the robot cleaner 100 drove, and identify an area to be re-cleaned not only among the previous areas to be cleaned but also among the areas that were not identified as areas to be cleaned.

The processor 140 may control the vacuum 120 to suction dust in an area to be cleaned with a suction strength corresponding to the amount of dust of the area to be cleaned. That is, the processor 140 may set the suction strength of the vacuum 120 in an area to be cleaned to correspond to the amount of dust. For example, as an amount of dust is greater, the processor 140 may set the strength of the vacuum 120 stronger. Accordingly, in case a plurality of areas to be cleaned are identified in a driving space, the suction strength may be set to be in proportion to the amount of dust existing in each area to be cleaned through the vacuum 120 in each area to be cleaned.

In the case of the conventional robot cleaner 100, it performed a cleaning operation with a suction strength that was set in advance. In particular, in the case of the conventional robot cleaner 100, it did not identify an amount of dust in advance through an image, but identified an amount of dust in a procession of suctioning dust. Thus, it was impossible to set the suction strength to correspond to an amount of dust identified in advance. However, the robot cleaner 100 according to the disclosure can identify an amount of dust on a bottom surface located in front of the robot (in particular, an area to be cleaned) in advance, and thus it is possible to set a suction strength corresponding to the amount of dust. Through this, an effect that the battery power consumption of the robot cleaner 100 is saved can be exerted.

The processor 140 may turn off the vacuum 120 (i.e., maintain the vacuum in a deactivated state) while the robot cleaner 100 is driving, and turn on the vacuum 120 (i.e., activate the vacuum) when the robot cleaner 100 is located in an area to be cleaned. That is, the processor 140 may not operate the vacuum 120 by turning off the vacuum 120 while the robot cleaner 100 is driving along a driving route. Then, the processor 140 may perform a cleaning operation by turning on the vacuum 120 only when it is identified that the robot cleaner 100 moves to an area to be cleaned and is located in the area to be cleaned. Through this, an effect that the battery power consumption of the robot cleaner 100 is saved can be exerted.

According to an embodiment of the disclosure, if it is identified that an area to be cleaned wherein a cleaning operation was completed is included in the view angle range of the camera 110, the processor 140 may increase the strength of a light output through the light emitter from the first strength to the second strength.

Specifically, the processor 140 may identify whether an area to be cleaned wherein a cleaning operation was completed is included in the view angle range of the camera 110 based on an image acquired through the camera 110. Then, if it is identified that an area to be cleaned wherein a cleaning operation was completed is included in the view angle range, the processor 140 may increase the strength of a light output through the light emitter. In particular, the processor 140 may increase the strength of a light output through the light emitter from the first strength to the second strength, and for this, the processor 140 may increase a driving current transmitted to the light emitting elements included in the light emitter.

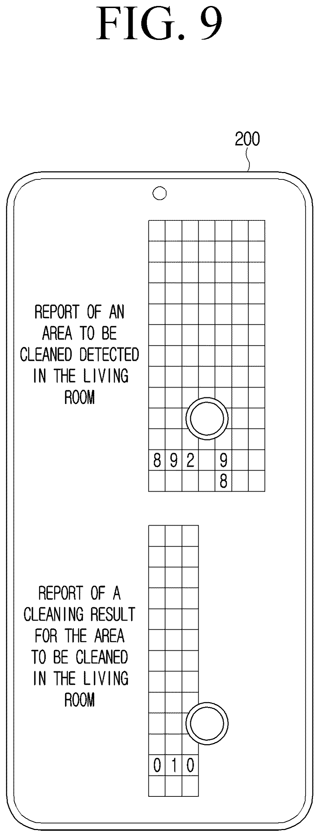

FIG. 9 is an example diagram illustrating the first map data 20 and the second map data 30 including dust information of an area to be cleaned acquired by the robot cleaner 100 displayed on a user terminal according to an embodiment of the disclosure.

According to an embodiment of the disclosure, the processor 140 may transmit the first and second map data 20 and 30 to the user terminal 200 through a communication interface whenever the first and second map data 20 and 30 are updated. Here, the processor 140 may display a GUI, an image object, etc. such that an amount of dust identified on an area to be cleaned that is included in the first and second map data 20 and 30 is displayed or the user can recognize an area to be cleaned, and transmit them to the user terminal 200. For example, the processor 140 may display a color only for an area to be cleaned among the plurality of areas included in the second map data 30, and may thereby enable the user to intuitively identify the area to be cleaned. Here, the processor 140 may display the color of the area to be cleaned differently according to the amount of dust of the area to be cleaned. For example, if the amount of dust is greater than or equal to a first value and smaller than a second value, the color may be displayed as yellow, and if the amount of dust is greater than or equal to a second value and smaller than a third value, the color may be displayed as red, and if the amount of dust is greater than or equal to a third value, the color may be displayed as black in the area to be cleaned.

The processor 140 may identify a reduction rate of dust for an area to be cleaned based on information on the amount of dust of the area to be cleaned included in the first and second map data 20 and 30, and display the identified reduction rate of dust on the area to be cleaned in the first map data 20, and transmit it to the user terminal 200 through the communication interface. Through this, the user can identify the cleaning efficiency of the robot cleaner 100 for the area to be cleaned.

Referring to FIG. 9, the user terminal 200 may receive the first and second map data 20 and 30 from the robot cleaner 100 in real time whenever the first and second map data 20 and 30 are updated. In particular, the first map data 20 including information on an amount of dust for an area wherein driving was completed may be displayed on the user terminal 200 in the form of a cleaning result report for the area to be cleaned, and the second map data 30 including information on an amount of dust for an area wherein the robot cleaner 100 is going to drive may be displayed on the user terminal 200 in the form of an identification report for the area to be cleaned.

The processor 140 may periodically calculate the number of times of being identified as an area to be cleaned for each area based on the second map data 30. Then, for an area of which number of times of being identified as an area to be cleaned is greater than or equal to a predetermined number of times, the processor 140 may designate the area as an area for caution, and transmit information on the area for caution to the user terminal through the communication interface. In particular, the processor 140 may display the location of the area for caution on the map data corresponding to the driving space, and transmit the map data and a message requesting a measure by the user for the area for caution to the user terminal through the communication interface.

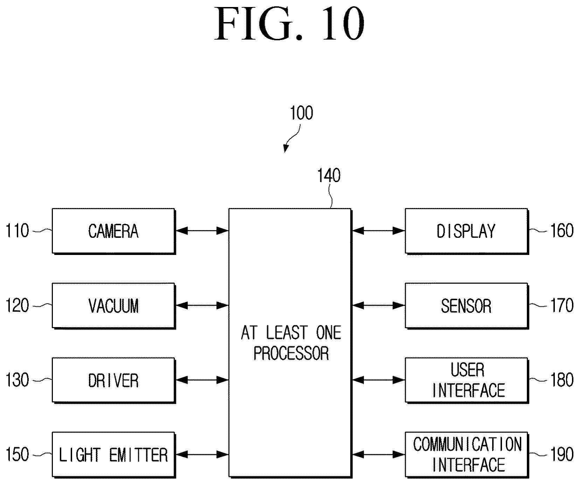

FIG. 10 is a detailed block diagram of the robot cleaner 100 according to an embodiment of the disclosure.

Referring to FIG. 10, the robot cleaner 100 includes a camera 110, a vacuum 120, a driver 130, a light emitter 150, a display 160, a sensor 170, a user interface 180, a communication interface 190, and at least one processor 140. Regarding the components overlapping with the components illustrated in FIG. 2, detailed explanation will be omitted.

The light emitter 150 may be a component that outputs a light toward a bottom surface located in front of the robot cleaner 100. For this, the light emitter 150 may include at least one light emitting element. For example, the light emitting element may be a light emitting diode (LED), a micro LED, etc. Here, the light emitting element may include an LED array including a plurality of LEDs.

The display 160 displays various kinds of image information according to control by the processor 140. Here, an image may be images in various formats such as a text, a still image, a moving image, a graphic user interface (GUI), etc. In particular, the display 160 may display the first and second map data.

Also, the display 160 may be implemented as a touch screen together with a touch panel. Here, the display 160 may function as an outputter that outputs information between the robot cleaner 100 and the user, and at the same time, function as an inputter that provides an input interface between the robot cleaner 100 and the user.

For this, the robot cleaner 100 may include displays 160 in various types that can display images such as a liquid crystal display (LCD), light emitting diodes (LED), and a plasma display panel (PDP), etc. The display 160 may additionally include supplementary components according to the implementation method. For example, in the case the display 160 is by a liquid crystal method, the display 160 may include an LCD display panel, a backlight unit supplying a light thereto, and a panel driver plate driving the panel.

The sensor 170 may acquire various kinds of sensing information around the robot cleaner 100. As an example, the sensor 170 may acquire distance information for objects (e.g., the wall, the furniture, an electronic device, etc.) located around the robot cleaner 100. Based on the sensing information acquired through the sensor 170, the processor 140 may generate map data for a driving space wherein the robot cleaner 100 is located. Then, based on the generated map data, the processor 140 may generate the first and second map data 20 and 30 including the information on amounts of dust. For this, the sensor 170 may be implemented as a ToF sensor, a LiDAR sensor, an infrared sensor, etc.

The user interface 180 is a component used for the robot cleaner 100 to perform an interaction with the user, and the processor 140 may receive inputs of various kinds of information through the user interface 180. The user interface 180 may include at least one of a touch sensor 170, a motion sensor 170, a button, a jog dial, a switch, a microphone, or a speaker, but the disclosure is not limited thereto.

The communication interface 190 may perform communication with an external device (e.g., the user terminal 200) and an external server through various communication methods. Communicative connection of the communication interface 190 with an external device and an external server may include performing communication via a third device (e.g., a repeater, a hub, an access point, a gateway, etc.). For example, an external device may be implemented as another electronic device, a server, a cloud storage, a network, etc.

The communication interface 190 may include various communication modules for performing communication with an external device. As an example, the communication interface 190 may include a wireless communication module, and may include, for example, a cellular communication module using at least one of 3rd Generation (3G), 3rd Generation Partnership Project (3GPP), Long Term Evolution (LTE), LTE Advance (LTE-A), code division multiple access (CDMA), wideband CDMA (WCDMA), a universal mobile telecommunications system (UMTS), Wireless Broadband (WiBro), or a Global System for Mobile Communications (GSM), etc. As another example, a wireless communication module may include, for example, at least one of Wireless Fidelity (WiFi), Bluetooth, Bluetooth low energy (BLE), or Zigbee.

Other than the above, the robot cleaner 100 may further include a memory. The memory may store data necessary for the various embodiments of the disclosure. Specifically, in the memory, the map data 10 and a driving route (e.g., information on the first driving route 512) of the robot cleaner 100 according to embodiments of the disclosure may be stored.

The memory may be implemented in the form of a memory embedded in the robot cleaner 100, or in the form of a memory that can be attached to or detached from the robot cleaner 100, according to the usage of stored data. For example, in the case of data for operating the robot cleaner 100, the data may be stored in a memory embedded in the robot cleaner 100, and in the case of data for an extended function of the robot cleaner 100, the data may be stored in a memory that can be attached on or detached from the robot cleaner 100.

With regard to a memory embedded in the robot cleaner 100, the memory may be implemented as at least one of a volatile memory (e.g., a dynamic RAM (DRAM), a static RAM (SRAM), or a synchronous dynamic RAM (SDRAM), etc.) or a non-volatile memory (e.g., an one time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash, etc.), a hard drive, or a solid state drive (SSD)).

Also, in the case of a memory that can be attached to or detached from the robot cleaner 100, the memory may be implemented in forms such as a memory card (e.g., compact flash (CF), secure digital (SD), micro secure digital (Micro-SD), mini secure digital (Mini-SD), extreme digital (xD), a multi-media card (MMC), etc.) and an external memory that can be connected to a USB port (e.g., a USB memory 130), etc.

Methods according to the aforementioned various embodiments of the disclosure may be implemented in forms of applications that can be installed on the conventional robot cleaner 100. Alternatively, the methods according to the aforementioned various embodiments of the disclosure may be performed by using a trained neural network based on deep learning (or a deeply trained neural network), i.e., a learning network model. Also, the methods according to the aforementioned various embodiments of the disclosure may be implemented just with software upgrade, or hardware upgrade for the conventional robot cleaner 100. In addition, the aforementioned various embodiments of the disclosure may also be performed through an embedded server provided on the robot cleaner 100, or an external server of the robot cleaner 100.

According to an embodiment of the disclosure, the aforementioned various embodiments may be implemented as software including instructions stored in machine-readable storage media, which can be read by machines (e.g., computers). The machines refer to devices that call instructions stored in a storage medium, and can operate according to the called instructions, and the devices may include a display device according to the embodiments disclosed herein (e.g., a display device A). In case an instruction is executed by a processor, the processor may perform a function corresponding to the instruction by itself, or by using other components under its control. An instruction may include a code that is generated or executed by a compiler or an interpreter. A storage medium that is readable by machines may be provided in the form of a non-transitory storage medium. Here, the term 'non-transitory' only means that a storage medium does not include signals, and is tangible, but does not indicate whether data is stored in the storage medium semi-permanently or temporarily.

Also, according to an embodiment, the methods according to the aforementioned various embodiments may be provided while being included in a computer program product. A computer program product refers to a product, and it can be traded between a seller and a buyer. A computer program product can be distributed on-line in the form of a storage medium that is readable by machines (e.g., a compact disc read only memory (CD-ROM)), or through an application store (e.g., Play Store^{™}). In the case of on-line distribution, at least a portion of a computer program product may be stored in a storage medium such as the server of the manufacturer, the server of the application store, and the memory of the relay server at least temporarily, or may be generated temporarily.

In addition, each of the components according to the aforementioned various embodiments (e.g., a module or a program) may consist of a singular object or a plurality of objects. Also, among the aforementioned corresponding sub components, some sub components may be omitted, or other sub components may be further included in the various embodiments. Alternatively or additionally, some components (e.g., a module or a program) may be integrated as an object, and perform the functions that were performed by each of the components before integration identically or in a similar manner. A module, a program, or operations performed by other components according to the various embodiments may be executed sequentially, in parallel, repetitively, or heuristically. Or, at least some of the operations may be executed in a different order or omitted, or other operations may be added.

Also, while embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A robot cleaner comprising:
a camera;
a vacuum configured suction dust from a surface on which the robot cleaner is disposed;
a driver configured to move the robot cleaner;
at least one memory storing one or more instructions; and
at least one processor configured to execute the one or more instructions,
wherein the one or more instructions, when executed by the at least one processor, cause the robot cleaner to:
acquire at least one image through the camera while the robot cleaner moves along a first driving route,
identify an amount of dust in one or more areas within a view angle of the camera based on the at least one image,
control the vacuum to perform a cleaning operation for an area to be cleaned from among the one or more areas based on the amount of dust that is identified,
acquire first map data indicating an amount of dust in a first area among the one or more areas, wherein the first area corresponds to a portion of the first driving route that the robot cleaner has previously driven,
acquire second map data indicating an amount of dust of a second area among the one or more areas, wherein the second area corresponds to a portion of the first driving route that the robot cleaner has yet to drive, and
based on the area to be cleaned not being located on the first driving route, set a second driving route that includes the area to be cleaned, and control the driver to move the robot cleaner along the second driving route.

2. The robot cleaner of claim 1, wherein the one or more instructions, when executed by the at least one processor, further cause the robot cleaner to:
identify an area in which the amount of dust is greater than or equal to a predetermined value, among the one or more areas, as the area to be cleaned.

3. The robot cleaner of claim 1, wherein the one or more instructions, when executed by the at least one processor, further cause the robot cleaner to:
acquire the second map data before performing the cleaning operation,
based on the robot cleaner completing the cleaning operation along the second driving route, control the driver to return the robot cleaner to the first driving route, and
wherein the first map data comprises information re-identifying the amount of dust in an area among the one or more areas that was previously cleaned by the robot cleaner.

4. The robot cleaner of claim 3, further comprising a communication interface,
wherein the one or more instructions, when executed by the at least one processor, further cause the robot cleaner to:
identify a reduction rate of dust for the area to be cleaned based on the first map data and the second map data, and
transmit the first map data and the identified reduction rate of dust for the area to be cleaned to a user terminal device through the communication interface.

5. The robot cleaner of claim 3, wherein the one or more instructions, when executed by the at least one processor, further cause the robot cleaner to:
based on the driving of the robot cleaner along the first driving route being completed:
identify at least one area to be re-cleaned among the one or more areas based on the first map data, wherein the at least one area to be re-cleaned was previously cleaned by the robot cleaner,
set a third driving route including the at least one area to be re-cleaned, and
control the driver to move the robot cleaner along the third driving route.

6. The robot cleaner of claim 1, wherein the one or more instructions, when executed by the at least one processor, further cause the robot cleaner to:
control the vacuum to suction dust in the area to be cleaned with a suction strength corresponding to the amount of dust identified in the area to be cleaned.

7. The robot cleaner of claim 2, wherein the one or more instructions, when executed by the at least one processor, further cause the robot cleaner to:
based on the robot cleaner being located in the area to be cleaned, activate the vacuum, and
based on the robot cleaner being located in an area among the one or more areas other than the area to be cleaned, control the vacuum to be in a deactivated state.

8. The robot cleaner of claim 1, further comprising a light emitter configured to emit light,
wherein the one or more instructions, when executed by the at least one processor, further cause the robot cleaner to:
based on the robot cleaner driving along the first driving route, emit a light toward a bottom surface located in front of the robot cleaner through the light emitter, and
wherein the at least one image comprises at least one image of the bottom surface that was irradiated with the light.

9. The robot cleaner of claim 8, wherein the one or more instructions, when executed by the at least one processor, further cause the robot cleaner to:
based on identifying that an area among the one or more areas included within the view angle of the camera is an area that was previously cleaned by the robot cleaner, increase a strength of the light emitted by the light emitter from a first strength to a second strength.

10. A method of controlling a robot cleaner, the method comprising:
acquiring at least one image through a camera of the robot cleaner while the robot cleaner drives along a first driving route;
identifying an amount of dust in one or more areas within a view angle of the camera based on the at least one image;
controlling a vacuum of the robot cleaner to perform a cleaning operation for an area to be cleaned from among the one or more areas based on the amount of dust that is identified;
acquiring first map data indicating an amount of dust of a first area among the one or more areas, wherein the first area corresponds to a portion of the first driving route that the robot cleaner has previously driven; and
acquiring second map data indicating an amount of dust of a second area among the one or more areas, wherein the second area correspond to a portion of the first driving route that the robot cleaner has yet to drive,
wherein the controlling the vacuum comprises:
identifying the area to be cleaned based on the amount of dust in the area to be cleaned;
based on the area to be cleaned not being located on the first driving route, setting a second driving route that includes the area to be cleaned; and
controlling a driver of the robot cleaner to move the robot cleaner along the second driving route.

11. The method of claim 10, wherein the controlling the vacuum further comprises:
identifying an area in which the amount of dust is greater than or equal to a predetermined value, among the one or more areas, as the area to be cleaned.

12. The method of claim 10, further comprising:
based on the robot cleaner completing the cleaning operation along the second driving route, controlling the driver to return the robot cleaner to the first driving route,
wherein the acquiring the second map data comprises acquiring the second map data before performing the cleaning operation, and
wherein the acquiring the first map data comprises re-identifying the amount of dust in an area among the one or more areas that was previously cleaned by the robot cleaner.

13. The method of claim 12, further comprising:
identifying a reduction rate of dust for the area to be cleaned based on the first map data and the second map data; and
transmitting the first map data and the identified reduction rate of dust for the area to be cleaned to a user terminal device through a communication interface.

14. The method of claim 12, further comprising:
based on the driving of the robot cleaner along the first driving route being completed:
identifying at least one area to be re-cleaned among the one or more areas based on the first map data, wherein the at least one area to be re-cleaned was previously cleaned by the robot cleaner;
setting a third driving route including the at least one area to be re-cleaned; and
controlling the driver to move the robot cleaner along the third driving route.

15. A non-transitory computer readable storage medium having instructions stored therein, which when executed by at least one processor cause the at least one processor to execute a method of controlling a robot cleaner, the method comprising:
acquiring at least one image through a camera of the robot cleaner while the robot cleaner drives along a first driving route;
identifying an amount of dust in one or more areas within a view angle of the camera based on the at least one image;
controlling a vacuum of the robot cleaner to perform a cleaning operation for an area to be cleaned from among the one or more areas based on the amount of dust that is identified;
acquiring first map data indicating an amount of dust of a first area among the one or more areas, wherein the first area corresponds to a portion of the first driving route that the robot cleaner has already driven; and
acquiring second map data indicating an amount of dust of a second area among the one or more areas, wherein the second area correspond to a portion of the first driving route that the robot cleaner has yet to drive,
wherein the controlling the vacuum comprises:
identifying the area to be cleaned based on the amount of dust in the area to be cleaned;
based on the area to be cleaned not being located on the first driving route, setting a second driving route that includes the area to be cleaned; and
controlling a driver of the robot cleaner to move the robot cleaner along the second driving route.
